# EUROPEAN PATENT APPLICATION

(11) **EP 4 717 933 A1**
(43) Date of publication of application: **01.04.2026**
(21) Application number: 24203176.3
(22) Date of filing: 27.09.2024
(51) Int. Cl.: F16B 13/14

(54) **SLEEVE AND METHOD FOR PERMANENTLY FIXING A THREADED ELONGATED MEMBER IN A BOREHOLE**

(71) Applicant: Hilti Aktiengesellschaft, 9494 Schaan (LI)
(72) Inventor: Echterbruch, Arne, 86899 Landsberg (DE); Jennrich, Rebecca, 86159 Augsburg (DE); Knoll, Katharina, 82467 Garmisch-Partenkirchen (DE)
(74) Representative: Hilti Aktiengesellschaft Corporate Intellectual Property

(57) **Abstract**

Sleeve for fixing a threaded elongated member in a borehole in an article comprising a base material, wherein the sleeve comprises a sleeve body, wherein the sleeve body has an axis, a wall, an outer surface of the wall, a hollow body portion having an inner surface, and two receiving openings for receiving the threaded elongated member.

## Description

### Technical Field of the invention

The present invention is related to glued-in rods in boreholes. More precisely, the present invention relates to a method for permanently fixing a threaded elongated member in a borehole, a sleeve for permanently fixing a threaded elongated member in a borehole, a kit of parts comprising said sleeve and a threaded elongated member, and the use of said sleeve for permanently fixing a threaded elongated member into a borehole. Most preferably, the present invention relates to permanently fixing the threaded elongated member in a borehole in an article made from timber.

### Background of the Invention

Glued-in rods are a widely used connection or reinforcement method in construction. The system of glued-in rods consists of a threaded rod that is bonded into a borehole to provide high stiffness, high load performance and aesthetic benefits. Thereby, the borehole can be in articles made from concrete or timber.

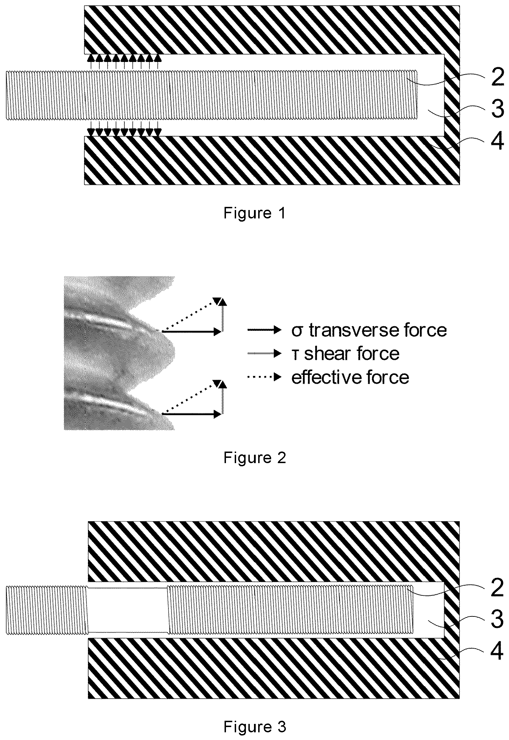

One problem occurring with glued-in rods is that transverse forces are caused by the thread of the rod when the anchor rod is subjected to tensile load. These transverse forces are believed to cause splitting failure of the base material in which the hole was drilled. This in particular becomes important if the base material has a preferred strength direction such as in reinforced concrete or in timber due to fiber direction. Figures 1 and 2 schematically depict directions of the forces described.

This splitting failure is the reason why most glued-in rods are used with the edge and space distances that are prescribed in '*EOTA Technical Report* - *Design for Glued-in Rods for Timber Connections (TR070)'.* Hence, the edge distance for glued-in rods parallel to the grain is a2,c = 2,5 d and the distance between two rods a2 = 5 d. It has been shown that the distances specified in TR070 can prevent the splitting failure. Nevertheless, such minimum distance constitutes a limitation in construction and reinforcement methods. Thus, it has been a desire to find alternative solutions.

As a solution, the prior art described systems, in which the thread of the rod in the upper embedment area has been removed, cf. Figure 3. By the removal of the thread close to the opening of the borehole, transverse forces are avoided. This decreases the tendency of splitting failure and, thus, the edge and rod distances can be reduced. I could be shown that the edge distance can be a2,c =1.9 d and the rod distance a2 is reduced to 3.8 d.

### Summary of the Invention

However, this solution has the severe disadvantage that removing the thread in the upper embedment area reduces the flexibility in choosing the depth of embedment. For this solution to work, the rods have to be prepared in manufacturing wherein only rods of defined length can be offered to the customer. In such a scenario, the customer would also be dependent on the special manufacturer, which might lead to longer lead-times. In another scenario, the thread of the rods had to be removed on the construction site by the worker before glueing in the rod. This, however, requires special equipment, special knowledge, time, and money. A further general disadvantage of this solution of the prior art is that the removal of the thread is an additional working step in manufacturing that also causes metal waste.

It is therefore an object of the present invention to provide a solution for a glued-in threaded rod in a borehole, preferably a borehole in concrete or timber, wherein splitting failure is reduced and wherein no further modification of the threaded rod is necessary.

It has now surprisingly been found that above-mentioned object can be achieved by a sleeve for fixing a threaded elongated member in a borehole in an article comprising a base material, wherein the sleeve comprises a sleeve body, wherein the sleeve body has an axis, a wall, an outer surface of the wall, a hollow body portion having an inner surface, and two receiving openings for receiving the threaded elongated member.

Furthermore, it has surprisingly been found that above-mentioned object can also be achieved by a kit of parts for permanently fixing a threaded elongated member in a borehole in an article comprising a base material, the kit of parts comprising
- a sleeve according to the present invention,
- the threaded elongated member, and
- a multi-component resin system.

Moreover, it has surprisingly been found that above-mentioned object is also achieved by a method for permanently fixing a threaded elongated member in a borehole in an article comprising a base material, the method comprising the steps of
- drilling in a *drilling step* a borehole into the article comprising a base material,
- positioning in a *sleeve positioning step* a sleeve according to the present invention in the borehole,
- inserting in an *inserting step* the threaded elongated member into the sleeve,
- filling in a *filling step* the borehole with a multi-component resin system,
- curing in a *curing step* the multi-component resin system in the borehole.

Further surprisingly, the above-mentioned object can also be achieved by the use of a sleeve according to the invention or of a kit of parts according to the invention for permanently fixing a threaded elongated member in a borehole in an article comprising a base material by the sleeve and a multi-component resin system.

Without wishing to be bound by theory it is believed that with covering the thread in the part close to the borehole opening, transverse forces are eliminated in this area. Thus, splitting failure is reduced.

It is a particular advantage of the present invention that the sleeve can be placed anywhere on the threaded rod, thereby providing full flexibility in choosing the embedment depth of the glued-in rods system. It is another advantage of the present invention that the sleeve allows the use of conventionally shaped rods, and no customization of the rod is needed. Furthermore, the sleeve advantageously centers the rod in the borehole and allows higher precision of the connection. Finally, the sleeves impedes that the rod is pushed out of the borehole due to the pressure of the mortar that is filled into the borehole.

### Brief Description of the Drawings

- Figure 1: is a schematic drawing of a glued-in rod as described in the prior art. The arrows denote transversal forces causing splitting failure of the base material in which the hole was drilled.
- Figure 2: is a drawing schematically showing the connection between tensile (effective) force, shear force and transversal force depending on the threaded surface of the elongated member (glued-in rod).
- Figure 3: is a schematic drawing of a glued in rod as described in the prior art, which has a section without a thread in the part close to the opening of the borehole.
- Figure 4: is a schematic drawing showing an embodiment of the sleeve of the present invention.
- Figure 5: is a schematic drawing of the sleeve according to Figure 4 put onto an elongated threaded member.
- Figure 6: is a cross-sectional schematic drawing of an embodiment of the sleeve according to the present invention with and without an elongated threaded member inserted therein.
- Figure 7: is a schematic drawing of a glued-in rod using a sleeve according to the present invention and a bypass filling method for the mortar system.
- Figure 8: is a technical drawing of a preferred embodiment of the sleeve according to the present invention.

### List of reference signs

- **1**: Sleeve
- **2**: Threaded elongated member
- **3**: Borehole
- **4**: Article comprising a base material
- **5**: Sleeve body
- **6**: Axis of the sleeve body
- **7**: Wall of the sleeve
- **8**: Outer surface of the wall
- **9**: Hollow body portion
- **10**: Inner surface of the hollow body portion
- **11**: Two receiving openings
- **11a**: Outer receiving opening
- **11b**: Inner receiving opening
- **12**: Collar
- **13**: Sealing means
- **14**: Projection
- **15**: First bypass hole
- **16**: Second bypass hole
- **17**: Slot
- **18**: Inner protrusion

### Definitions

The term *'aliphatic compounds'* as used herein denotes acyclic or cyclic, saturated, or unsaturated carbon compounds, excluding aromatic compounds.

The terms *'cycloaliphatic compounds'* or '*alicyclic compounds*' as used herein denote compounds having a carbocyclic ring structure, excluding benzene derivatives or other aromatic systems.

The term '*aromatic compounds*' as used herein denotes compounds that follow the Hückel (4n+2) rule.

The term '*amines*' as used herein denotes compounds derived from ammonia by replacement of one, two or three hydrogen atoms by hydrocarbon groups and having the general structures RNH₂ (primary amines), R₂NH (secondary amines) and R₃N (tertiary amines) (see: *IUPAC Compendium of Chemical Terminology,* 2^{nd} Ed. (the '*Gold* Book'), compiled by A. D. McNaught and A. Wilkinson, Blackwell Scientific Publications, Oxford (1997)).

The term *'salts'* as used herein denotes compounds composed of positively charged ions (cations) and negatively charged ions (anions). Ionic bonds are present between these ions. For example, the expression *'salts of nitric acid'* describes compounds that are derived from nitric acid (HNO₃) and include a nitrate (NO₃⁻) as an anion. The expression *'salts of trifluoromethanesulfonic acid'* describes compounds derived from trifluoromethanesulfonic acid (CF₃SO₃H) and comprise as an anion a triflate (CF₃SO₃⁻). The term salt in the sense of the present invention also includes the corresponding hydrates of the salts. The salts(s) which are used as accelerators are also referred to as salts in the sense of the present invention,

The terms '*a*' or '*an*' as articles preceding a chemical compound class mean that one or more compounds falling under that chemical compound class may be meant. In a preferred embodiment, these articles mean only a single compound.

The term '*at least one*' means numerically *'one or more'.* In a preferred embodiment, the term numerically means *'one'.*

The terms *'include'* and *'comprising'* mean that there may be other components in addition to those mentioned. These terms are meant inclusively and therefore include *'consisting of'. 'Consisting of'* is meant conclusively and means that no further constituents may be present. In an embodiment, the terms *'comprise'* or *'comprising'* mean *'consisting of'.* A range delimited by numbers, e.g., *'from* 80°C *to 120°C'* means that the two corner values and each value within that range are individually disclosed.

The term *'multi-component system'* as used herein denotes a system comprising several components stored separately from each other, so that curing of the ingredients contained in the components occurs only after the components have been mixed.

### Detailed Description of the Invention

As described above, the present invention relates to a sleeve, a kit of parts, a method, and a use. Each of these embodiments will be described in detail in the following.

### Sleeve according to the Invention

In the most general embodiment, the present invention relates to a sleeve (**1**) for fixing a threaded elongated member (**2**) in a borehole (**3**) in an article comprising a base material (**4**), wherein the sleeve (**1**) comprises
- a sleeve body (**5**), wherein the sleeve body (**5**) has an axis (**6**),
- a wall (**7**),
- an outer surface (**8**) of the wall (**7**),
- a hollow body portion (**9**) having an inner surface (**10**), and
- two receiving openings (**11**) for receiving the threaded elongated member (**2**).

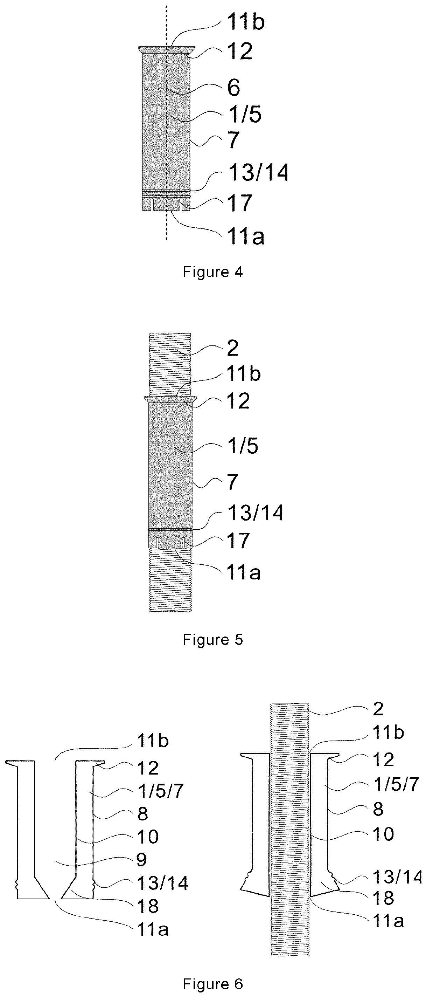

Such a sleeve is depicted in Figures 4 to 7.

Preferably, the base material is selected from concrete or timber, preferably timber. If the base material is concrete, it is preferably reinforced concrete, most preferably steel-reinforced concrete. Preferably, in case the base material is timber, the timber is selected from softwood, more preferably Pine, Spruce, Fir (Douglas Fir), Cedar, and Larch, and hardwood, preferably Oak, Teak, Maple, Birch, and Beech.

Preferably, the outer surface (**8**) of the outer wall (**7**) is a substantially flat surface and/or the inner surface (**10**) of the hollow body portion (**9**) has a substantially flat surface. More preferably, the outer surface (**8**) of the outer wall (**7**) is not shaped as a thread and/or the inner surface (**10**) of the hollow body portion (**9**) is not shaped as a thread. If the outer surface (**8**) is substantially flat and/or is not shaped as a thread, it is believed that tensile forces produce less transverse force, thereby reducing splitting. A less direct effect is believed to be connected to the inner surface (**10**) of the hollow body portion (**9**) having a substantially flat surface or not being shaped as a thread: as this ensures that respective forces are also not transferred from the threaded elongated member (**2**) to the sleeve (**1**), they could also not be further transferred from the sleeve (**1**) to the article (**4**).

While several materials for the sleeve (**1**) are conceivable, such as metal, preferably, the sleeve (**1**) comprises, more preferably consists of, a plastic material, more preferably a polymer composition. Polymers as typically used for dowels could be used in the sleeve (**1**) of the present invention. Most preferably, the polymer composition of the sleeve (**1**) preferably comprises a polyolefin, such as a polypropylene homo- or copolymer.

It is preferred that the sleeve (**1**) fits the threaded elongated member (**2)** in that the threaded elongated member (**2**) can be inserted into the sleeve (**1**). Hence, preferably, the hollow body portion (**9**) of the body (**5**) of the sleeve (**1**) has an average diameter, wherein the average diameter is larger than the average diameter of the threaded elongate member (**2**). Preferably, the average diameter is about 10% larger than the average diameter of the threaded elongate member (**2**), more preferably about 5%, and most preferably about 2%.

It is also preferred that the threaded elongated member (**2**) has a tight seat in the sleeve (**1**) according to the present invention. Hence, preferably, the hollow body portion (**9**) of the body (**5**) of the sleeve (**1**) has an average diameter, one of the two receiving openings (**11**) is an outer receiving opening (**11a**), and the other of the two receiving openings (**11**) is an inner receiving opening (**11b**), wherein the average diameter of the hollow body portion (**9**) decreases from the outer receiving opening (**11a**) to the inner receiving opening (**11b**). This ensures that the threaded elongated member (**2**) will be seated tightly in the sleeve (**1**). Preferably, the average diameter of the hollow body portion (**9**) at the inner receiving opening (**11b**) is in the range of from 3 to 20% of the average diameter of the hollow body portion (**9**) of the outer opening, more preferably in the range of from 5 to 15%, and most preferably in the range of from 7 to 13%.

Also preferably, the threaded elongated member (**2**) is a threaded anchor or a threaded rod, more preferably a threaded rod comprising, preferably consisting of, a metal, and most preferably a threaded rod comprising, preferably consisting of, steel. Preferably, the surface of the threaded elongated member (**2**) is completely covered by a thread. Typically, a threaded rod has a substantially cylindrical shape. Hence, to achieve a good fit, preferably, the sleeve body (**5**) and/or the hollow body portion (**9**) have a substantially cylindrical shape, preferably a cylindrical shape.

In a preferred embodiment of the sleeve (**1**), one of the two receiving openings (**11**) is an outer receiving opening (**11a**), wherein the outer receiving opening (**11a**) comprises a collar (**12**) protruding from the wall (**7**) outwardly from the axis (**6**) around the outer receiving opening (**11a**). The collar has the advantage that the sleeve is not pushed inside the borehole during carrying out the method according to the present invention. Rather, the collar (**12**) holds the sleeve (**1**) in a position close to or at the edge of the borehole. As in this area the splitting failure predominately occurs, ensuring that the sleeve (**1**) is positioned in this area improves the reduction of splitting failure and the reliability of the method. Most preferably, the collar (**12**) and the wall (**7**) are formed from one piece. This facilitates the production, reduces costs and optimizes the connection between the collar (**12**) and the wall (**7**). In an even more preferred embodiment of the sleeve (**1**) comprising a collar (**12**), the collar (**12**) protrudes from the axis (**6**) in an angle in the range of from 30 to 60° in relation to said axis (**6**), preferably in the range of from 40 to 50 , more preferably in the range of from 42 to 48° (cf. Figures 4-7). This further helps to reliably centering the sleeve (**1**) and therefore also the threaded elongated member (**2**) in the borehole (**3**). Furthermore, preferably, the collar (**12**) has a thickness in the range of from 80 to 100% of the thickness of the wall (**7**) of the sleeve (**1**), preferably in the range of from 90 to 98%, and most preferably in the range of 95 to 97%. This ensures that the collar (**12**) is stiff enough to withstand any pushing forces provided by the threaded elongated member (**2**) during carrying out the method according to the present invention.

In another preferred embodiment of the sleeve (**1**) according to the present invention, one of the two receiving openings (**11**) is an inner receiving opening (**11b**), wherein the sleeve (**1**) comprises sealing means (**13**) on the outer surface (**8**) of the wall (**7**) on a half of the body (**5**) comprising the inner receiving opening (**11b**). This ensures that adhesive does not enter the gap between the outer surface (**8**) of the sleeve (**1**) and the borehole (**3**). Without wishing to be bound by theory it is believed that adhesive within said gap can form a force connection between the sleeve and the borehole. Hence, the presence of a sealing means (**13**) prevents the formation of such force connection. If the force connection is not present, it is believed that less transverse forces can be transferred from the sleeve (**1**) to the borehole therefore ensuring and improving the effect of reducing the splitting failure.

Preferably, the sealing means (**13**) includes at least one projection (**14**) adjacent to the outer surface (**8**) of the wall (**7**) and around the axis (**6**) of the sleeve (**1**). More preferably, the at least one projection (**14**) encloses the sleeve body (**5**). Likewise, more preferably, the at least one projection (**14**) defines a plane, where in the plane is perpendicular to the axis (**6**) of the sleeve (**1**). This ensures that in the area of the projection the threaded elongated member (**2**) will put pressure on the sleeve (**1**) when being applied to a borehole. At the projection (**14**), the pressure will be highest ensuring a tight fit between the projection (**14**) and the borehole (**3**), thereby achieving the sealing functionality. Thereby, the projection (**14**) is in the range of from 10 to 20% of the thickness of the wall (**7**) of the sleeve (**1**), preferably in the range of from 12 to 17%.

More preferably, the sleeve (**1**) comprises at least two projections (**14**) adjacent to the outer surface (**8**) of the wall (**7**) and around the axis (**6**) of the sleeve (**1**), preferably enclosing the sleeve body (**5**), more preferably defining a plane, where in the plane is perpendicular to the axis (**6**) of the sleeve (**1**). This further improves the sealing of the gap between the outer surface (**8**) and the borehole (**3**).

In another preferred embodiment of the sleeve (**1**) according to the present invention, one of the two receiving openings (**11**) is an inner receiving opening (**11b**), wherein the sleeve (**1**) comprises a slot (**17**) in the wall (**7**) extending from the inner receiving opening (**11b**) towards the outer receiving opening (**11a**) (cf. Figures 4, 5, and 7). Preferably, the slot (**17**) extends in a direction parallel to the axis (**6**). More preferably, the slot (**17**) extends until the sealing means (**13**), but not further in the direction of the outer receiving opening (**11b**). The sleeve (**1**) comprises preferably two or more slots (**17**). Usually, the sleeve (**1**) comprises not more than six slots (**17**). Most preferably, the sleeve (**1**) comprises two slots (**17**). The slots (**17**) provide space for the remaining parts of the wall (**7**) to extend itself when the threaded elongated member (**2**) is inserted into the sleeve in the borehole (**3**). This further improves the seat, tightness, and centrality of the sleeve (**1**) in the borehole (**3**).

Preferably, the sleeve (**1**) having a slot (**17**) further comprises an inner protrusion (**18**) on the inner surface (**9**) between the slots (**17**) (cf. Figure 6). Thereby, the inner protrusion preferably is a mere thickening of the wall from the inner part thereof to the edge of the inner receiving opening (**11b**). Most preferably, the protrusion is a continuous increase of the thickness the wall (**7**) from the inner part thereof to the edge of the inner receiving opening (**11b**). This embodiment has the advantage that upon insertion of the threaded elongated member (**2**), the inner protrusion (**18**) is pressed towards the borehole (**3**), thereby increasing the tightness of the seat of the sleeve (**1**) and thereby centrality of the threaded elongated member (**2**) in the borehole (**3**). The sleeve (**1**) comprises preferably two or more inner protrusions (**18**), more preferably three or more. Usually, the sleeve (**1**) comprises not more than six inner protrusions (**18**). Most preferably, the sleeve (**1**) has the same number of inner protrusions (**18**) as slots (**17**).

It should be noted that preferably, the sleeve (**1**) comprises all of the aforementioned features, i.e. the collar (**12**), the sealing means (**13**), in particular the projection (**14**), the slot (**17**), and the protrusion (**18**).

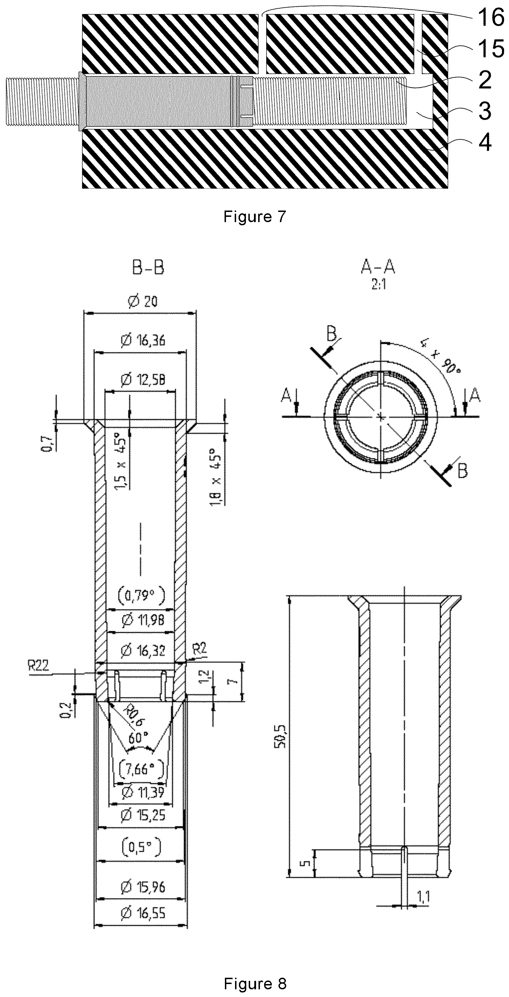

In Figure 8, a particularly preferred embodiment of the sleeve (**1**) according to the present invention has been shown. In this Figure preferred values for the dimensions of the sleeve have been defined. The dimensions of the sleeve (**1**) depend on the dimensions of the used rod. Preferably, the sleeve (**1**) can have dimensions for rods having diameters ranging from M6 to M30. Preferably, the length of the sleeve (**1**) is in the range of 4 to 6 times the diameter of the rod, preferably is 5 times the diameter of the rod. Hence, in case of Figure 8 showing dimensions of a sleeve (**1**) for a rod having a M16 diameter, the length of the sleeve body (**5**) along the axis (**6**) is in the range of from 30 to 70 mm, preferably 40 to 60 mm, more preferably 45 to 55 mm. Furthermore, in case of Figure 8 showing dimensions of a sleeve (**1**) for a rod having a M16 diameter, the average diameter of the hollow body portion (**9**) is in the range of from 7 to 18 mm, preferably 10 to 15 mm, and more preferably 11 to 14 mm. Moreover, preferably, the thickness of the wall (**7**) of the sleeve (**1**) is in the range of from 1.8 to 5.8 mm, preferably in the range of from 2.8 to 4.8 mm, and most preferably from 3.4 to 4.2 mm.

### Kit of parts according to the Invention

As also described above, the invention further is concerned with a kit of parts for permanently fixing a threaded elongated member (**2**) in a borehole (**3**) in an article comprising a base material (**4**), the kit of parts comprising:
- a sleeve (**1**),
- the threaded elongated member (**2**), and
- a multi-component resin system.

Preferably, the base material is selected from concrete or timber, preferably timber. If the base material is concrete, it is preferably reinforced concrete, most preferably steel-reinforced concrete. Preferably, in case the base material is timber, the timber is selected from softwood, more preferably Pine, Spruce, Fir (Douglas Fir), Cedar, and Larch, and hardwood, preferably Oak, Teak, Maple, Birch, and Beech.

The sleeve (**1**) can be any of the sleeves (**1**) described hereinbefore for the sleeve (**1**) according to the invention.

Preferably, the threaded elongated member (**2**) is a threaded anchor or a threaded rod, more preferably a threaded rod comprising, preferably consisting of, a metal, and most preferably a threaded rod comprising, preferably consisting, of steel. Preferably, the surface of the threaded elongated member (**2**) is completely covered by a thread. Typically, a threaded rod has a substantially cylindrical shape.

The multi-component resin system is a multi-component system as described hereinafter in the section *'multi-component resin system'.*

In a preferred embodiment of the invention, the kit of parts further comprises a filling means for the multi-component resin system, wherein the filling means preferably is a multi-chamber dispenser, wherein the multi-chamber dispenser comprises the multi-component resin system.

### Method according to the Invention

As already described beforehand, the present invention is concerned with a method for permanently fixing a threaded elongated member (**2**) in a borehole (**3**) in an article comprising a base material (**4**), the method comprising the steps of
- drilling in a *drilling step* a borehole (**3**) into the article comprising a base material (**4**),
- positioning in a *sleeve positioning step* a sleeve (**1**) according to any of the preceding claims 1 to 16 in the borehole (**3**),
- inserting in an *inserting step* the threaded elongated member (**2**) into the sleeve (**1**),
- filling in a *filling step* the borehole (**3**) with a multi-component resin system,
- curing in a *curing step* the multi-component resin system in the borehole (**3**).

Preferably, the base material is selected from concrete or timber, preferably timber. If the base material is concrete, it is preferably reinforced concrete, most preferably steel-reinforced concrete. Preferably, in case the base material is timber, the timber is selected from softwood, more preferably Pine, Spruce, Fir (Douglas Fir), Cedar, and Larch, and hardwood, preferably Oak, Teak, Maple, Birch, and Beech.

The sleeve (**1**) can be any of the sleeves (**1**) described hereinbefore for the sleeve (**1**) according to the invention.

Preferably, the threaded elongated member (**2**) is a threaded anchor or a threaded rod, more preferably a threaded rod comprising, preferably consisting of, a metal, and most preferably a threaded rod comprising, preferably consisting of, steel. Preferably, the surface of the threaded elongated member (**2**) is completely covered by a thread. Typically, a threaded rod has a substantially cylindrical shape.

The multi-component resin system is a multi-component system as described hereinafter in the section *'multi-component resin system'.*

Preferably, the method comprises after the *drilling step* and prior to the *sleeve positioning step* the step of
- cleaning in a *cleaning step* the borehole (**3**), preferably by pressurized air.

In an even more preferred embodiment of the method according to the present invention, the *drilling step* comprises drilling a first bypass hole (**15**) perpendicular to a main direction of the borehole (**3**), whereby the first bypass hole (**15**) joins the borehole (**3**) at an inner end of the borehole (**3**), and drilling a second bypass hole (**16**), wherein the second bypass hole (**16**) joins the borehole (**3**) at a position opposite of the one end but in an area, which will not be covered by the sleeve (**1**), and wherein the *filling step* comprises the step of filling the borehole (**3**) via the first and/or the second bypass hole (**16**). In a most preferred embodiment of the method according to the present invention, the *drilling step* comprises drilling a first bypass hole (**15**) perpendicular to a main direction of the borehole (**3**), whereby the first bypass hole (**15**) joins the borehole (**3**) at one end, and drilling a second bypass hole (**16**), wherein the second bypass hole (**16**) joins the borehole (**3**) at the opposite end of the one end, and wherein the *filling step* comprises the step of filling the borehole (**3**) via the first or the second bypass hole (**16**). Preferably, the borehole (**3**) is filled in the *filling step* from bottom to top. Hence, preferably, in the *filling step,* the multi-component resin system is filled in the lower bypass hole with respect to the direction of the gravitational force.

### Use of the Invention

Finally, the present invention relates to the use of a sleeve (**1**) or of a kit of parts for permanently fixing a threaded elongated member (**2**) in a borehole (**3**) in an article comprising a base material (**4**) by the sleeve (**1**) and a multi-component resin system.

Preferably, the base material is selected from concrete or timber, preferably timber. If the base material is concrete, it is preferably reinforced concrete, most preferably steel-reinforced concrete. Preferably, in case the base material is timber, the timber is selected from softwood, more preferably Pine, Spruce, Fir (Douglas Fir), Cedar, and Larch, and hardwood, preferably Oak, Teak, Maple, Birch, and Beech.

The sleeve (**1**) can be any of the sleeves (**1**) described hereinbefore for the sleeve (**1**) according to the invention.

The kit of parts can be any of the kits of parts described hereinbefore for the kit of parts according to the invention.

Preferably, the threaded elongated member (**2**) is a threaded anchor or a threaded rod, more preferably a threaded rod comprising, preferably consisting of, a metal, and most preferably a threaded rod comprising, preferably consisting of, steel. Preferably, the surface of the threaded elongated member (**2**) is completely covered by a thread. Typically, a threaded rod has a substantially cylindrical shape.

The multi-component resin system is a multi-component system as described hereinafter in the section *'multi-component resin system'.*

### Multi-component resin system

The multi-component resin system of the kit of parts, the method, and/or the use according to the present invention contains a resin component (A) comprising at least one reactive resin, and a hardener component (B) comprising at least one hardener for the at least one reactive resin contained in the resin component (A), wherein the at least one reactive resin in resin component (A) is a curable epoxy resin having an average epoxy functionality of 2 or greater, and the at least one curing agent in hardener component (B) is a curing agent for the curable epoxy resin, preferably at least one amine reactive to epoxy groups having an NH functionality of 2 or greater.

### a) Resin component (A)

The epoxy resin component (A) of the multi-component resin system according to the present invention typically comprises liquid and solid constituents. As a typically liquid component, at least one epoxy resin-based reactive synthetic resin ("*epoxy resin component (A)*") is usually included. According to the invention, *"epoxy resin"* is understood to mean a compound or the combination of two or more compounds containing a reactive epoxy group, also called oxirane group. Such an epoxy group is shown in formula I below:

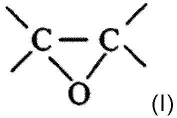

Suitable curable epoxy resins for use in resin component (A) of the multi-component resin system of the present invention are many commercially available compounds known to those skilled in the art, which contain on average more than one epoxide group, preferably two epoxide groups, per molecule. These epoxy resins can be both saturated and unsaturated and aliphatic, alicyclic, aromatic, or heterocyclic and can also contain hydroxyl groups. They may further contain such substituents that do not cause interfering side reactions under the mixing or reaction conditions, for example, alkyl or aryl substituents, ether groups and the like. Within the scope of the invention, trimeric and tetrameric epoxides are also suitable.

Preferably, the epoxy resins are glycidyl ethers derived from polyhydric alcohols, particularly polyhydric phenols such as bisphenols and novolaks, especially those having an average glycidyl group functionality of 1.5 or greater, especially 2 or greater, for example from 2 to 10.

The epoxy resins may have an epoxy equivalent weight (EEW) of from 120 to 2000 g/EQ, preferably from 140 to 400. Mixtures of several epoxy resins can also be used.

Examples of polyhydric phenols used to prepare epoxy resins include resorcinol, hydroquinone, 2,2-bis(4-hydroxyphenyl)propane (bisphenol A), mixtures of isomers of dihydroxyphenylmethane (bisphenol F), tetrabromo bisphenol A, novolac types, 4,4'-dihydroxyphenylcyclohexane, and 4,4'-dihydroxy-3,3'-dimethyldiphenylpropane.

Epoxy-based monomers/resins useful in the present invention include, without limiting the scope of the invention, diglycidyl ethers of bisphenol A and F, and aliphatic and cycloaliphatic epoxides. Other examples include hexanediol diglycidyl ethers, trimethylolpropane triglycidyl ethers, bisphenol A epichlorohydrin resins, and/or bisphenol F epichlorohydrin resins, for example, having an average molecular weight of MW ≤ 2000 g/mol. Liquid diglycidyl ethers based on bisphenol A and/or F with an EEW of 150 to 300 g/EQ are preferred.

The EEW (epoxide equivalent weight) values are usually indicated on the starting materials by the manufacturers, or they are determined or calculated according to known methods. They indicate the amount in g of resin containing 1 mole of epoxy groups: EEW = MW / functionality.

The proportion of epoxy resin in the epoxy resin component (A) is >0 to 70% by weight, preferably 10 to 65% by weight and particularly preferably 30 to 60% by weight, based on the total weight of the epoxy resin component (A).

According to the invention, reactive diluents, such as glycidyl ethers of aliphatic, alicyclic, or aromatic mono- or polyalcohols, which have a lower viscosity than epoxides containing aromatic groups, can be used as a further liquid component. Examples of reactive diluents are monoglycidyl ethers, e.g. o-cresyl glycidyl ethers, and glycidyl ethers with an epoxide functionality of at least 2, such as 1,4-butanediol diglycidyl ether (BDDGE), cyclohexanedimethanol diglycidyl ether and hexanediol diglycidyl ether, as well as tri- or higher glycidyl ethers, such as glycerol triglycidyl ether, pentaerythritol tetraglycidyl ether, trimethylolpropane triglycidyl ether (TMPTGE) or trimethylol ethane triglycidyl ether (TMETGE), with trimethylol ethane triglycidyl ether being preferred. Mixtures of two or more of these reactive diluents can also be used, preferably mixtures containing triglycidyl ether, particularly preferably as a mixture of 1,4-butanediol diglycidyl ether (BDDGE) and trimethylolpropane triglycidyl ether (TMPTGE) or 1,4-butanediol diglycidyl ether (BDDGE) and trimethylolethane triglycidyl ether (TMETGE).

Overall, the reactive diluents are preferably present in an amount of >0 to 60% by weight, particularly 1 to 20% by weight, based on the total weight of the epoxy resin component (A).

The proportion of epoxy resin component (A) in the total weight of the multi-component resin system is preferably from 5 to 90% by weight, in particular from 20 to 80% by weight or from 30 to 70% by weight, such as from 40 to 70% by weight.

Suitable epoxy resins and reactive thinners can also be found in the standard work by Michael Dornbusch, Ulrich Christ, and Rob Rasing, *"Epoxy Resins,"* Vincentz Network GmbH & Co KG (2015), ISBN 13: 9783866308770. These compounds are incorporated herein by reference.

Further conceivable additives to the epoxy resin component (A) are thixotropic agents, such as optionally organically post-treated fumed silica, bentonites, alkyl and methyl celluloses and rhizinus oil derivatives, plasticizers such as phthalic or sebacic esters, stabilizers, antistatic agents, thickeners, flexibilizers, curing catalysts, rheological aids, wetting agents, coloring additives such as dyes or pigments, for example for different coloring of the components for better control of their mixing, as well as wetting agents, phlegmatizers, dispersants and other reaction rate control agents, or mixtures of two or more thereof.

### b) Hardener component (B)

Hardener component (B) of the multi-component resin system comprises at least one hardener, wherein the hardener comprises at least one compound commonly used for epoxy curing (reaction partner in polyaddition). The other additives of the hardener component of an epoxy-based luting mortar system according to the invention can be provided, for example, in a weight proportion totaling 0.01 to 70% by weight, e.g., 1 to 40% by weight, based on the hardener component (B).

The compounds commonly used for epoxy curing (acting as reactants in polyaddition) are in particular those having two or more groups selected from amino, imino, and mercapto, for example corresponding amines, thiols, or aminothiols, or mixtures thereof, for example as mentioned in Lee H and Neville K, *"Handbook of Epoxy Resins"* (New. York: McGraw-Hill), 1982.

According to the invention, one or more amines, preferably polyamines, may be used as reactive hardener components. Suitable amines for use in the curing agent are, in particular, those customary for epoxy-amine systems and known to those skilled in the art, selected from aliphatic, alicyclic and aromatic amines, the amine having on average at least two reactive hydrogen atoms bonded to a nitrogen atom per molecule. This includes polyamines having at least two amino groups in the molecule.

Suitable amines, without limiting the scope of the invention, include: 1,2-diaminoethane(ethylenediamine), 1,2-propanediamine, 1,3-propanediamine, 1,4-diaminobutane, 2,2-dimethyl-1, 3-propanediamine(neopentanediamine), diethylaminopropylamine (DEAPA), 2-methyl-1, 5-diaminopentane, 1,3-diaminopentane, 2,2,4- or 2,4,4-trimethyl-1, 6-diaminohexane and mixtures thereof (TMD), 1-Amino-3-aminomethyl-3, 5,5-trimethylcyclohexane, 1,3-bis(aminomethyl)cyclohexane, 1,2-bis(aminomethyl)cyclohexane, hexamethylenediamine (HMD), 1, 2- and 1,4-diaminocyclohexane (1,2-DACH and 1,4-DACH), bis(4-aminocyclohexyl)methane, bis(4-amino-3-methylcyclohexyl)methane, diethylenetriamine (DETA), 4-Azaheptane-1, 7-diamine, 1,11-diamino-3, 6,9-trioxundecane, 1,8-diamino-3, 6-dioxaoctane, 1,5-diamino-methyl-3-azapentane, 1,10-diamino-4, 7-dioxadecane, bis(3-aminopropyl)amine, 1,13-diamino-4,7, 10-trioxatridecane, 4-aminomethyl-1, 8-diaminooctane, 2-butyl-2-ethyl-1, 5-diaminopentane, N, N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornandiamine), dimethyldipropylenetriamine, dimethylaminopropyl-aminopropylamine (DMAPAPA), 3-aminomethyl-3, 5,5-trimethylcyclohexylamine (isophoronediamine (IPD)), diaminodicyclohexylmethane (PACM), mixed polycyclic amines (MPCA) (e.g. E.g., Ancamine 2168), dimethyldiaminodicyclohexylmethane (Laromin^{®} C260), 2,2-bis(4-aminocyclohexyl)propane.

Polyamines preferred according to the invention are 2-methylpentanediamine (DYTEK^{®} A), 1-amino-3-aminomethyl-3, 5,5-trimethylcyclohexane (IPD), 1,3-benzenedimethanamine (m-xylylenediamine, mXDA), 1,4-benzenedimethanamine (p-xylylenediamine, PXDA), 1,6-diamino-2, 2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5. 2.1. 02,6]decane (mixture of isomers, tricyclic primary amines; TCD diamine), 1,14-diamino-4, 11-dioxatetradecane, dipropylenetriamine, 2-methyl-1, 5-pentanediamine, N, N'-dicyclohexyl-1, 6-hexanediamine, N, N'-dimethyl-1, 3-diaminopropane, N, N'-diethyl-1, 3-diaminopropane, N, N-dimethyl-1, 3-diaminopropane, secondary polyoxypropylenediamines and triamines, 2,5-diamino-2, 5-dimethylhexane, bis(aminomethyl)tricyclopentadiene, 1,8-diamino-p-menthane, bis-(4-amino-3, 5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, or piperazine.

The one or more epoxy-reactive amines are preferably present in hardener component (B) in an amount of 10 to 90 wt.-%, more preferably 35 to 60 wt.-%, based on the total weight of hardener component (B).

In addition to one or more amines, hardener component (B) according to the present invention may further contain a salt (S) as an accelerator. According to the invention, the salt (S) is at least one salt selected from the group consisting of salts of nitric acid, salts of nitrous acid, salts of halogens, salts of trifluoromethanesulfonic acid, and combinations thereof. Preferably, the salt (S) is at least one salt selected from the group consisting of salts of nitric acid, salts of halogens, salts of trifluoromethanesulfonic acid, as well as combinations thereof. It has been found to be particularly preferred that the salt (S) is selected from the group consisting of nitrates (NO₃⁻), iodides (I⁻), triflates (CF₃SO₃⁻), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as Ca(NO₃)₂ or NaNOs. It is also possible to use as salt (S) a solution of a salt in nitric acid such as a solution containing Ca(NO₃)₂/HNO₃. To prepare this solution, CaCO₃ is dissolved in HNO₃.

Suitable salts of nitrous acid are in particular alkali metal nitrites, alkaline earth metal nitrites, lanthanoid nitrites, aluminum nitrite, ammonium nitrite and mixtures thereof. Corresponding salts of nitrous acid are commercially available. Preferably, alkali metal nitrites and/or alkaline earth metal nitrites are used as salts of nitrous acid, such as Ca(NO₂)₂.

Suitable salts of the halogens are in particular alkali metal halides, alkaline earth metal halides, lanthanide halides, aluminum halides, ammonium halides and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal nitrates and/or alkaline earth metal nitrates are used as salts of the trifluoromethanesulfonic acid, such as Ca(CF₃SO₃)₂.

In principle, the cations of the salt (S) can be organic, inorganic or a mixture thereof. Preferably, the cation of the salt (S) is an inorganic cation.

As organic cations, for example, ammonium cations substituted with organic radicals, such as tetraethylammonium cations substituted with C₁-C₆ alkyl radicals, can be considered.

Preferably, cations selected from the group consisting of alkali metals, alkaline earth metals, lanthanides, aluminum, ammonium (NH₄⁺) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt (S). It is particularly preferred that the cation of salt (S) is selected from the group consisting of sodium, calcium, aluminum, ammonium, and mixtures thereof.

The salt (S) may be included in hardener component (B) in an amount of e.g., up to 12 wt.-%, such as up to 10 wt.-, preferably up to 8 wt.-%, based on the total weight of hardener component (B).

Thus, the following compounds or components are particularly suitable as salt (S): Ca(NO₃)₂ (calcium nitrate, usually used as Ca(NO₃)₂ tetrahydrate), a mixture of Ca(NO₃)₂/HNO₃, KNO₃ (potassium nitrate), NaNOs (sodium nitrate), Mg(NO₃)₂ (magnesium nitrate, usually used as Mg(NO₃)₂ hexahydrate), Al(NO₃)₃ (aluminum nitrate, usually used as Al(NO₃)₃ nonahydrate), NH₄NO₃ (ammonium nitrate), Ca(NO₂)₂ (calcium nitrite), NaCl (sodium chloride), NaBr (sodium bromide), Nal (sodium iodide), Ca(CF₃SO₃)₂ (calcium triflate), Mg(CF₃SO₃)₂ (magnesium triflate), Li(CF₃SO₃)₂ (lithium triflate).

Hardener component (B) of the multi-component resin system of the invention may comprise one or more salts (S). The salts may be used singly or in a mixture of two or more of the said salts.

To improve the solubility properties of the salt (S) in the hardener composition, it may be provided that the salt (S) is dissolved in a suitable solvent and used accordingly as a solution. Organic solvents such as methanol, ethanol and glycerol are suitable for this purpose. However, water can also be used as solvent, if necessary, also in mixture with the aforementioned organic solvents. To prepare the corresponding salt solutions, the salt (S) is added to the solvent and stirred, preferably until completely dissolved.

In addition, hardener component (B) of the multi-component resin system according to the present invention may optionally include co-accelerators used in combination with the above salt (S).

Examples of suitable co-accelerators are in particular tris-2,4,6-dimethylaminomethyl-phenol, 2,4,6-tris(dimethylamino)phenol and bis[(dimethylamino)methyl]phenol. A suitable co-accelerator mixture contains 2,4,6-tris(dimethylaminomethyl)phenol and bis(dimethylaminomethyl)phenol. Mixtures of this kind are commercially available, for example as Ancamine^{®} K54 (Evonik, Germany).

These co-accelerators are preferably contained in hardener component (B) in a weight proportion of from 0.001 to 5 wt.%, based on the total weight of the hardening hardener component (B).

As an alternative, the co-accelerator can be a phenol derivative. The phenol derivative is preferably selected from the group consisting of polyphenols from the group of novolac resins, styrenated phenols, phenolic lipids, and combinations thereof.

Compounds of the following formula (II) are preferably used as polyphenols from the group of novolac resins: 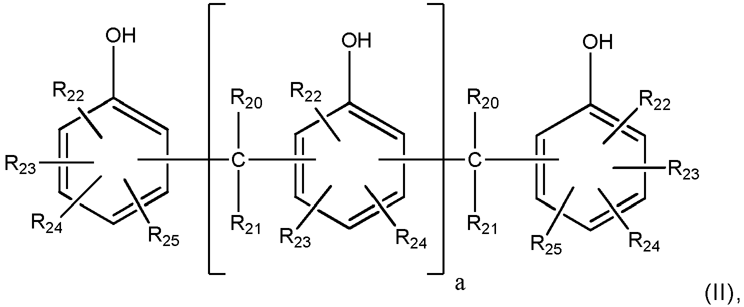 in which
R₂₀ and R₂₁ each denote, independently of one another, H or -CH₃;
R₂₂, R₂₃, R₂₄ and R₂₅ each denote, independently of one another, H, -CH₃ or an aliphatic functional group, preferably a linear, optionally partially unsaturated, unbranched hydrocarbon chain having up to 15 carbon atoms or an alkaryl functional group, preferably -C₈H₉; and where
a is 0 to 20, preferably 0 to 15.

The polyphenol from the group of novolac resins particularly preferably corresponds to the following formula (III): 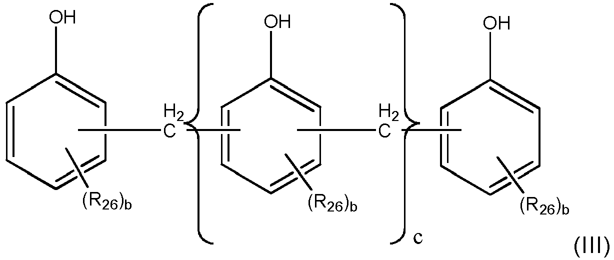 in which
R₂₆ denotes a C₁-C₁₅ alkyl group, preferably a methyl group or tert.-butyl group;
b is 0, 1 or 2, and is preferably 1; and
c is 0 to 15, and is preferably 0 to 6.

The novolac resin very particularly preferably corresponds to the above formula (III), in which R₂₆ denotes CH₃ and b is 1 or 2, or R₂₆ denotes tert.-butyl or a C₁-C₁₅ alkyl group and b is 1, and where c is 0 to 15, preferably 1 to 15.

The term styrenated phenols is understood to mean the electrophilic substitution products of phenols such as phenol, pyrocatechol, resorcinol, hydroquinone, hydroxyhydroquinone, phloroglucinol, pyrogallol, o-cresol, m-cresol or p-cresol with styrene or styrene analogs, such as vinyltoluene, vinylpyridine or divinylbenzene, in particular styrene. The styrenated phenol is particularly preferably selected from the reaction products of styrene and phenol which contain mixtures of compounds or individual compounds of the following formulae (IV), (V), (VI), and (VII): 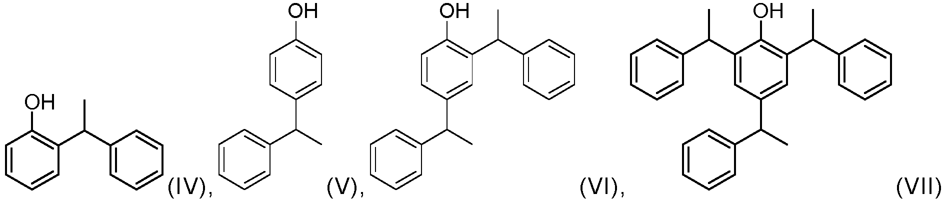 or 2,6-distyrylphenol, such as oligo- and polystyrene compound parts or compounds (products obtained from cationic polymerization of styrenes in phenols, oligomeric or polymeric products).

The term *"phenolic lipids"* is a collective term for a class of natural products that includes long aliphatic chains and phenolic rings. The phenolic lipid is preferably selected from alkyl catechols, alkyl phenols, alkyl resorcinols and anacardic acids. The at least one phenolic lipid is particularly preferably an alkylphenol selected from propylphenol, butylphenol, amylphenol, octylphenol, nonylphenol, dodecylphenol and cardanol-based compounds.

The hardener component (B) according to the multi-component resins system (i) of the invention can comprise one or more phenol derivatives. The phenol derivatives can be used both individually and in a mixture of two or more of the specified phenol derivatives. The hardener component (B) according to the invention preferably contains the phenol derivative in a proportion of from 4 to 25 wt.%, preferably from 10 to 20 wt.%, based on the total weight of the curing agent composition.

In a preferred embodiment, the phenol derivative is at least one polyphenol selected from the group of novolac resins and is combined with a salt (S) selected from the group of nitrates. The weight percent ratio of all phenol derivatives, in particular the polyphenols from the group of novolac resins, to all salts (S) in the hardener component (B) according to the invention is preferably 250:1 to 1:4, more preferably 40:1 to 1:2.

Alternatively, according to the invention, Mannich bases can be used as hardening agent in hardener component (B). Suitable Mannich bases are the reaction products of a selected amine and an aldehyde or aldehyde precursor with a phenolic compound selected from the group consisting of phenol or a styrolized phenol, pyrocatechol, resorcinol, styrolized resorcinol, hydroquinone, hydroxyhydroquinone, phloroglucin, pyrogallol, o-cresol, m-cresol, p-cresol, or bisphenols, such as bisphenol A or bisphenol F, and combinations thereof, preferably phenol or a styrolized phenol, styrolized resorcinol or bisphenol A.

The selected amine for preparing the Mannich base has a structure according to formula (VIII): 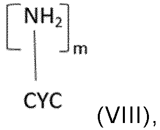
wherein "CYC" means a1) a monocyclic saturated ring having 3 to 12 ring atoms or a2) a bicyclic saturated ring system having 3 to 12 ring atoms per ring, the two rings of the bicyclic saturated ring system being linked to each other via an aliphatic group having 1, 2 or 3 carbon atoms and each of the two rings carrying at least one of the m [NH₂] groups, or a3) a fused di- or polycyclic saturated ring system having 6 to 12 ring atoms and
m is a positive integer greater than or equal to 2.

The selected amine can also be used in the form of one of its salts. In these cases, one or both hydrogen atoms of the m amino groups [-NH₂] are replaced by alkali and/or alkaline earth metals. The use of corresponding salts of the selected amines makes it possible to adjust the solubility properties of the selected amine.

The selected amines for the preparation of the Mannich base are characterized by having at least two NH₂ groups directly bonded to different ring atoms. Preferably, the selected amines have exactly two NH₂ groups directly bonded to different ring atoms. Accordingly, in a preferred embodiment, m is equal to 2.

The definitions of "CYC" described in variants a1), a2) and a3) may optionally be methyl- or dimethyl-substituted per ring in each case.

The definitions of "CYC" described in variants a1), a2) and a3) preferably have an aliphatic structure, i.e., the rings and, if appropriate, the linkage of two rings consist only of carbon and hydrogen atoms. However, it is also possible that the rings according to variants a1), a2) and a3) have heteroatoms.

In these cases, the ring in variant a1) or the ring system in variants a2) and a3) may have 0 to 3 nitrogen atoms, 0 to 3 oxygen atoms and 0 to 1 sulphur atoms.

Preferably, the number of ring atoms of the definitions of "CYC" described in variants a1), a2) and a3) 10 is 6 to 9, particularly preferably 6.

Particularly preferably, the selected amine is selected from the group consisting of 1,2-diaminocyclohexane, 1,4-diaminocyclohexane (1,2-DACH and 1,4-DACH), bis(4-aminocyclohexyl)methane (PACM), 4,4'-methylenebis(2-methyl-cyclohexyl-amine) (MACM), 3-aminomethyl-3,5,5-trimethylcyclohexylaminoe (IPDA), 5-(aminomethyl)bicyclo[[2.2.1]hept-2-yl]methylamin (NBDA) and methylcyclohexyldiamine (MCDA).

The selected amines may be used singly or in a mixture of two or more of said selected amines. The amine used for reacting with the aldehyde and the phenolic compound so as to form the Mannich base is preferably one of the above-mentioned amines which are reactive to epoxy groups, and preferably 1,3-benzenedimethanamine (mXDA), 3-aminomethyl-3,5,5-trimethylcyclohexane (IPDA), 1,3-bis(aminomethyl)cyclohexane (1,3-BAC), iaminodicyclohexyl methane (PACM), methylcyclohexyl diamine (mCDA) and 5-(aminomethyl)bicyclo[[2.2.1]hept-2-yl]methylamine (NBDA). The amine is preferably present in excess, such that the Mannich base has free amino groups.

The amine used for reacting with the aldehyde and the phenolic compound so as to form the Mannich base can also be an aminosilane selected from the group consisting of 3-aminoalkyltrialkoxysilanes, such as 3-aminopropyl-tri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkyl-alkyldialkoxysilanes such as N-(2-aminoethyl)-3-aminopropylmethyldi(m)ethoxysilane, 3-[2-(2-aminoethylamino)ethylamino]propyltri(m)ethoxysilane, bis-(gamma-trimethoxysilylpropyl)amine, or mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate and N-dimethoxy(methyl)silylmethyl-O-methylcarbamate.

To form the Mannich base, a phenolic compound is reacted with at least one of the selected amines described above and an aldehyde or an aldehyde precursor that yields an aldehyde by decomposition. The aldehyde or aldehyde precursor can advantageously be added to the reaction mixture as an aqueous solution, in particular at an elevated temperature of about 50°C to 90°C and reacted with the selected amine as well as the phenolic compound.

As the phenolic compound, phenol or a styrolized phenol, pyrocatechol, resorcinol, styrolized resorcinol, hydroquinone, hydroxyhydroquinone, phloroglucin, pyrogallol, o-cresol, m-cresol, p-cresol, or bisphenols, such as bisphenol A or bisphenol F, and combinations thereof, particularly preferably phenol or a styrolized phenol, styrolized resorcinol or bisphenol A are used to form the Mannich base.

The aldehyde used to form the Mannich base is preferably an aliphatic aldehyde, particularly preferably formaldehyde. Preferably, trioxane or paraformaldehyde can be used as the aldehyde precursor, which decompose to formaldehyde by heating in the presence of water.

Preferably, the selected amine is present in excess during the reaction with the phenolic compound and the aldehyde, so that the Mannich base has free amino groups.

In another embodiment, hardener component (B) of the multi-component resin system according to the present invention may also comprise as the hardening agent mixtures of (i) styrenated phenols with (ii) amines. Amines usable in the mixture with styrenated phenols (which amines can be present as such or in salt form) include those mentioned above, especially N,N'-bis(3-amino-n-propyl)piperazine (BAPP), 1,3-bis(aminomethyl)cyclohexane (BAC), N-(2-aminoethyl)piperazine (AEP) or 3-aminomethyl-3,5,5-trimethylcyclohexylamine (isophoronediamine, IPDA), or other low molecular weight polyamines ("*polyamines*" also including diamines), especially oligomeric or monomeric aliphatic, cycloaliphatic, cycloheteroaliphatic, aromatic or araliphatic diamines, such as especially xylylenediamines, more especially m-xylylenediamine (1,3-bis(aminomethyl)benzene, MXDA); aliphatic polyamines, for example C₁-C₁₀alkane-di- or -polyamines, e.g. 1,2-diaminoethane, trimethylhexane-1,6-diamine, diethylenetriamine or triethylenetetraamine; oligomeric diamines of the formula H₂N-(CH₂)ᵢ-NH-[(CH₂)ⱼNH]ₖ-(CH₂)ₗ-NH₂, wherein i, j and I are each independently of the others from 2 to 4 and k is 0, 1 or 2, especially "*triethylenetetramine*" (TETA, i.e. N,N'-bis(2-aminoethyl)ethylenediamine) or tetraethylenepentamine (TEPA); cycloaliphatic amines, such as 1,2-diaminocyclohexane or bis(aminomethyl)tricyclodecane (TCD) or bis(4-aminocyclohexyl)methane (PACM), or amine adducts; or mixtures of two or more thereof; especially mixtures of one or more araliphatic diamines, more especially m-xylylenediamine, with one or more other polyamines, especially BAC, or more especially one or more araliphatic diamines, especially m-xylylenediamine itself, or mixtures of BAC and m-xylylenediamine.

Styrenated phenols in accordance with this embodiment are the reaction products (electrophilic substitution products) of phenols (such as phenol, pyrocatechol, resorcinol, hydroquinone, hydroxyhydroquinone, phloroglucinol, pyrogallol, o-cresol, m-cresol or p-cresol, especially phenol) with styrene or styrene analogues, such as vinyltoluene, divinylbenzene or 4-vinylpyridine, especially with styrene, especially "*styrenated phenol*" itself (reaction product of styrene and phenol; CAS Reg. No. 61788-44-1), which, by way of example, can contain mixtures of compounds or individual compounds of the following formulae (IX), (X), (XI), and (XII): 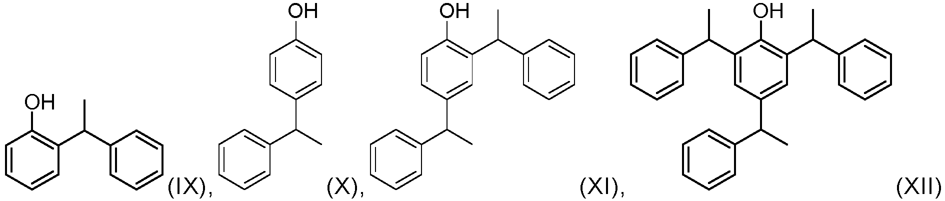 or 2,6-distyryl phenol, and also oligo- and poly-styrene portions or compounds (oligomeric or polymeric products obtained from cationic polymerisation of styrenes in phenols), for example of the formula (XIII) 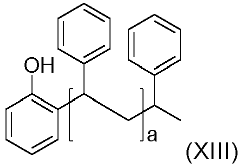 wherein a is 1 or a larger whole number, or branching products - in general, mixtures of a plurality of products formed during the reaction (including poly-substituted products) are obtained, so that the mentioned formulae are at most to be understood as being exemplary and are not necessarily - at least not in all cases - obtained as such.

## Claims

1. Sleeve (**1**) for fixing a threaded elongated member (**2**) in a borehole (**3**) in an article comprising a base material (**4**), wherein the sleeve (**1**) comprises
- a sleeve body (**5**), wherein the sleeve body (**5**) has an axis (**6**),
- a wall (**7**),
- an outer surface (**8**) of the wall (**7**),
- a hollow body portion (**9**) having an inner surface (**10**), and
- two receiving openings (**11**) for receiving the threaded elongated member (**2**).

2. The sleeve (**1**) according to claim 1, wherein the outer surface (**8**) of the wall (**7**) is a substantially flat surface and/or the inner surface (**10**) of the hollow body portion (**9**) has a substantially flat surface.

3. The sleeve (**1**) according to claims 1 or 2, wherein the hollow body portion (**9**) has an average diameter, one of the two receiving openings (**11**) is an outer receiving opening (**11a**), and the other of the two receiving openings (**11**) is an inner receiving opening (**11b**), wherein the average diameter of the hollow body portion (**9**) decreases from the outer receiving opening (**11a**) to the inner receiving opening (**11b**).

4. The sleeve (**1**) according to any of the preceding claims 1 to 3, wherein the sleeve body (**5**) and/or the hollow body portion (9) have a substantially cylindrical shape, preferably cylindrical shape.

5. The sleeve (**1**) according to any of the preceding claims 1 to 4, wherein one of the two receiving openings (**11**) is an outer receiving opening (**11a**) and wherein the outer receiving opening (**11a**) comprises a collar (**12**) protruding from the wall (**7**) outwardly from the axis (**6**) around the outer receiving opening (**11a**).

6. The sleeve (**1**) according to any of the preceding claims 1 to 5, wherein one of the two receiving openings (**11**) is an inner receiving opening (**11b**), wherein the inner receiving opening (**11b**) comprises sealing means (**13**) on the outer surface (**8**) of the wall (**7**).

7. The sleeve (**1**) according to claim 6, wherein the sealing means (**13**) includes at least one projection (**14**) adjacent to the outer surface (**8**) of the wall (**7**) and around the axis (**6**) of the sleeve (**1**).

8. The sleeve (**1**) according to claim 7, wherein the at least one projection (**14**) encloses the sleeve body (**5**).

9. The sleeve (**1**) according to claim 8, wherein the at least one projection (**14**) defines a plane, where in the plane is perpendicular to the axis (**6**) of the sleeve (**1**).

10. Kit of parts for permanently fixing a threaded elongated member (**2**) in a borehole (**3**) in an article comprising a base material (**4**), the kit of parts comprising
- a sleeve (**1**) according to any of the preceding claims 1 to 9,
- the threaded elongated member (**2**), and
- a multi-component resin system.

11. Method for permanently fixing a threaded elongated member (**2**) in a borehole (**3**) in an article comprising a base material (**4**), the method comprising the steps of
- drilling in a *drilling step* a borehole (**3**) into the article comprising a base material (**4**),
- positioning in a *sleeve positioning step* a sleeve (**1**) according to any of the preceding claims 1 to 9 in the borehole (**3**),
- inserting in an *inserting step* the threaded elongated member (**2**) into the sleeve (**1**),
- filling in a *filling step* the borehole (**3**) with a multi-component resin system,
- curing in a *curing step* the multi-component resin system in the borehole (**3**).

12. The method according to claim 11, wherein the *drilling step* comprises drilling a first bypass hole (**15**) perpendicular to a main direction of the borehole (**3**), whereby the first bypass hole (**15**) joins the borehole (**3**) at an inner end of the borehole (**3**), and drilling a second bypass hole (**16**), wherein the second bypass hole (**16**) joins the borehole (**3**) at a position opposite of the one end but in an area, which will not be covered by the sleeve (**1**), and wherein the *filling step* comprises the step of filling the borehole (**3**) via the first and/or the second bypass hole (**16**).

13. The kit of parts according to claim 10 or the method according to claims 11 or 12, wherein the threaded elongated member (**2**) is an anchor or a rod.

14. The kit of parts according to the preceding claims 10 or 12 or the method according to any of the preceding claims 11 to 13, wherein the multi-component resin system contains a resin component (A) comprising at least one reactive resin, and a hardener component (B) comprising at least one hardener for the at least one reactive resin contained in the resin component (A), wherein the at least one reactive resin in resin component (A) is a curable epoxy resin having an average epoxy functionality of 2 or greater, and the at least one curing agent in hardener component (B) is a curing agent for the curable epoxy resin, preferably at least one amine reactive to epoxy groups having an NH functionality of 2 or greater.

15. Use of a sleeve (**1**) according to any of the preceding claims 1 to 9 or of a kit of parts according to any of the preceding claims 10, 13, or 14 for permanently fixing a threaded elongated member (**2**) in a borehole (**3**) in an article comprising a base material (**4**) by the sleeve (**1**) and a multi-component resin system.
